# EUROPÄISCHE PATENTANMELDUNG

(11) **EP 0 999 107 A2**
(43) Veröffentlichungstag der Anmeldung: **10.05.2000**
(21) Anmeldenummer: 99121280.4
(22) Anmeldetag: 25.10.1999
(51) Int. Cl.: B60T 13/66

(54) **Bremsanlage**

(30) Priorität: 04.11.1998 DE 19850698
(71) Anmelder: Deutsche Bahn Aktiengesellschaft, 10365 Berlin (DE)
(72) Erfinder: Gräber, Johannes, 32429 Minden (DE); Sonder, Egbert, 32425 Minden (DE)

(57) **Zusammenfassung**

Die Erfindung betrifft eine Bremsanlage für Züge, insbesondere Güterzüge, mit mindestens einem Triebfahrzeug und wenigstens einem Wagen, wobei die Bremsanlage mit einem elektronischen Bremssystem ausgestattet ist, bei dem ein Triebfahrzeugrechner über einen Zugbus mit wenigstens einem Wagenrechner verbunden ist, und der Triebfahrzeugrechner Bremssteuersignale für die Wagenrechner über den Zugbus bereitstellt, und über die Wagenrechner eine Bremseinrichtung aktivierbar ist, die mit einer zuggebundenen pneumatischen Versorgungsleitung verbunden ist.

Es ist vorgesehen, daß dem Triebfahrzeugrechner (18) wenigstens ein vom Triebfahrzeugrechner (18) unabhängiges, externes Schaltmittel (40, 42, 44) zugeordnet ist, über das eine Unterbrechung einer Datenkommunikation zwischen dem Triebfahrzeugrechner (18) und dem wenigstens einen Wagenrechner (20) auslösbar ist.

## Beschreibung

Die Erfindung betrifft eine Bremsanlage für Züge, insbesondere Güterzüge, mit mindestens einem Triebfahrzeug und wenigstens einem Wagen, wobei die Bremsanlage mit einem elektronischen Bremssystem ausgestattet ist, bei dem ein Triebfahrzeugrechner über einen Zugbus mit Wagenrechnern verbunden ist, und der Triebfahrzeugrechner Bremssteuersignale für die Wagenrechner über den Zugbus bereitstellt, und über die Wagenrechner eine Bremseinrichtung aktivierbar ist, die mit einer zuggebundenen pneumatischen Versorgungsleitung verbunden ist.

Eine derartige Bremsanlage ist beispielsweise aus "Elektrische/Elektronische Brems-Abfrage und Steuerung (<EBAS>) für Güterzüge" CEV+DET Glas. Ann. 119 (1995) S. 505 bis 512 bekannt. Durch die Einbindung eines elektronischen Bremssystems in die Bremsanlage des Zuges wird es möglich, die für die Funktion der Bremsanlage notwendigen Befehle über den Zugbus vom Triebfahrzeugrechner den einzelnen Wagenrechnern zu übermitteln. Bekannt ist, als Zugbus einen CAN(controller area network)-Bus einzusetzen. Entsprechend der über den Triebfahrzeugrechner, von einem Zugführer auslösbaren, Bremsbefehle werden elektropneumatische Bremseinrichtungen aktiviert. Die zuggebundene pneumatische Versorgungsleitung übernimmt hierbei eine Versorgungsfunktion der Bremseinrichtungen mit Druckluft.

Um eine Redundanz der Bremsanlage zu erreichen, ist bekannt, daß die Versorgungsleitung als zentrale Bremssteuerleitung (Hauptluftleitung) betrieben werden kann. Dies stellt eine sogenannte pneumatische Rückfallebene dar, die bei Ausfall des elektronischen Bremssystems die sicherheitsrelevanten Bremsfunktionen des Zuges gewährleistet. Aufbau und Funktion einer Hauptluftleitung in Bremsanlagen sind allgemein bekannt. Hierbei werden von der Hauptluftleitung gleichzeitig die Versorgungsfunktion und die Steuerfunktion durch ausgelöste, definierte Luftdruckänderungen, insbesondere Druckabsenkungen, übernommen.

Bei Zügen, die ausschließlich eine pneumatische Bremsanlage besitzen, ist bekannt, neben einem sogenannten Führerbremshebel, mittels dem ein Zugführer eine Bremsaktion auslösen kann, in die Hauptluftleitung unabhängig wirkende Steuerungsorgane (Notbremshähne) zu integrieren. Diese, auch als sogenannte Ackermann-Hähne bekannten, Steuerungsorgane sind entsprechend dem durch das elektronische Bremssytem zusammengestellten (getauften) Zug sowohl im Triebfahrzeug als auch gegebenenfalls in einzelnen zur Personenbeförderung ausgelegten Wagen angeordnet. Durch Öffnen der Steuerungsorgane erfolgt ein Druckabbau in der Hauptluftleitung, so daß eine Schnellbremsung (Notbremsung) eingeleitet werden kann.

Bei den mit einem elektronischen Bremssystem ausgestatteten Bremsanlagen ist nachteilig, daß durch Verlagerung der Bremssteuerung von der Hauptluftleitung auf den Zugbus ein Auslösen einer Schnellbremsung durch Öffnung der unabhängigen pneumatischen Steuerungsorgane wirkungslos wäre.

Es ist zwar bekannt, bei auftretenden Fehlern in der Datenkommunikation zwischen dem Triebfahrzeugrechner und den Wagenrechnern die Bremsanlage automatisch in die pneumatische Rückfallebene umzuschalten. Jedoch ist eine derartige Umschaltung nicht unabhängig von dem elektronischen Bremssystem durchführbar.

Der Erfindung liegt daher die Aufgabe zugrunde, eine Bremsanlage der gattungsgemäßen Art zu schaffen, bei der in einfacher Weise die Möglichkeit einer redundanten Notsignalübertragung möglich ist.

Erfindungsgemäß wird diese Aufgabe durch eine Bremsanlage mit den im Anspruch 1 genannten Merkmalen gelöst. Dadurch, daß dem Triebfahrzeugrechner wenigstens ein, vom Triebfahrzeugrechner unabhängiges, externes Schaltmittel zugeordnet ist, über das eine Unterbrechung einer Datenkommunikation zwischen dem Triebfahrzeugrechner und dem wenigstens einen Wagenrechner auslösbar ist, ist vorteilhaft möglich, eine gezielte Schnell(Not-)bremsung des Zuges unabhängig von einer Betätigung eines Führerbremshebels auszulösen. Hierdurch wird eine Redundanz der Bremsanlage erhalten.

In bevorzugter Ausgestaltung der Erfindung ist vorgesehen, daß mittels dem wenigstens einen Schaltmittel eine Unterbrechung einer Stromversorgung des Triebfahrzeugrechners erfolgt. Hierdurch kann unmittelbar ein Ausschalten des Triebfahrzeugrechners eingeleitet werden, so daß dessen Datenkommunikation mit den Wagenrechnern unterbrochen wird. Durch eine derartige Unterbrechung kann ein vorzugsweise vorprogrammiertes Signal über den Zugbus geleitet oder ausgeschaltet werden, das von allen angeschlossenen Wagenrechnern empfangen beziehungsweise vermißt wird, die daraufhin die Schnellbremsung auslösen. Insbesondere ist bevorzugt, wenn eine Spannungsversorgung des Triebfahrzeugrechners durch wenigstens zwei, in Reihe geschaltete Schaltmittel unterbrechbar ist. Hierdurch wird es möglich, an verschiedenen Stellen des Triebfahrzeuges, beispielsweise an zwei Führerständen des Triebfahrzeuges, jeweils eines dieser Schaltmittel vorzusehen. Insofern ist unabhängig von einer Fahrtrichtung des Triebfahrzeuges jederzeit ein unabhängig vom Triebfahrzeugrechner betätigbares Schaltmittel zum Auslösen einer Schnellbremsung vorhanden.

In weiterer bevorzugter Ausgestaltung der Erfindung ist vorgesehen, daß mittels des unabhängigen Schaltmittels ein Kurzschließen oder Unterbrechen des Zugbus erfolgt. Auch hierdurch wird in einfacher Weise erreicht, daß eine Unterbrechung der Datenkommunikation zwischen dem Triebfahrzeugrechner und den Wagenrechnern erfolgt, so daß die Wagenrechner die Schnellbremsung einleiten können. Insbesondere ist hierbei vorteilhaft, daß der Triebfahrzeugrechner mit seiner Spannungsversorgung verbunden bleibt, so daß dieser eventuell weitere Steuer- und Überwachungsfunktionen aufrechterhalten kann.

Ferner ist in bevorzugter Ausgestaltung der Erfindung vorgesehen, daß in den Wagen des Zuges zusätzlich jeweils wenigstens ein unabhängiges Schaltmittel vorhanden ist, mit dem eine Datenkommunikation zwischen dem Triebfahrzeugrechner und dem Wagenrechner unterbrochen werden kann. Somit wird es möglich, daß auch weitere Personen, außer dem Triebfahrzeugführer, bei Notsituationen eine Schnellbremsung auslösen können.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Ansicht einer Bremsanlage eines Zuges in einer erstens Ausführungsvariante;
- Figur 2: eine schematische Ansicht einer Bremsanlage eines Zuges in einer zweiten Ausführungsvariante und
- Figur 3: eine schematische Ansicht einer Bremsanlage eines Zuges in einer dritten Ausführungsvariante.

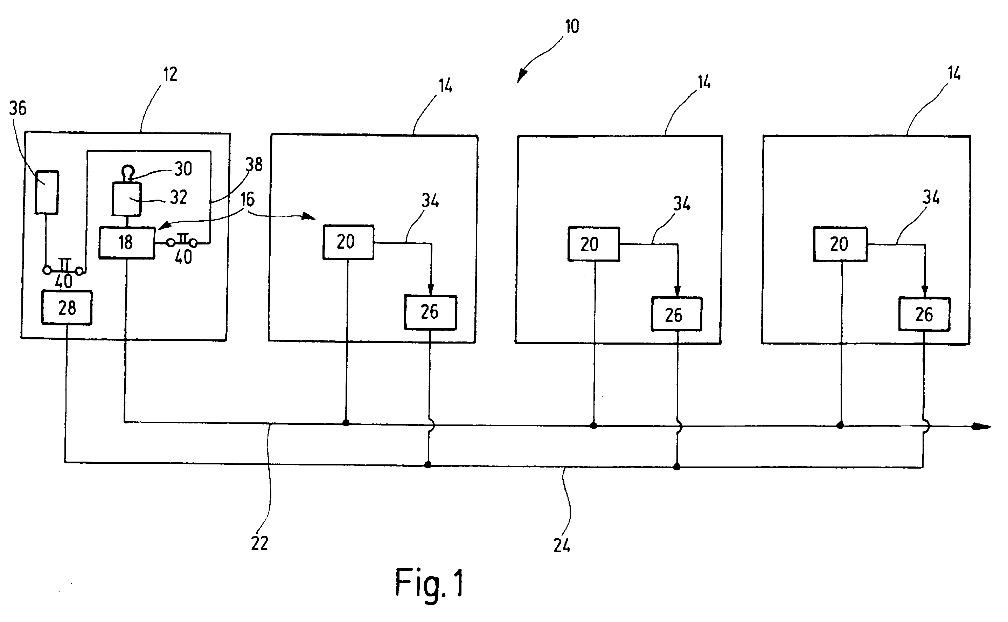

In Figur 1 ist schematisch ein insgesamt mit 10 bezeichneter Zug dargestellt, der ein Triebfahrzeug 12 und eine Anzahl von Wagen 14, hier drei Wagen 14, aufweist. Es ist selbstverständlich, daß der Zug mehr oder weniger Wagen 14 und mehr Triebfahrzeuge 12 aufweisen kann.

Der Zug 10 ist mit einem elektronischen Bremssystem 16 ausgestattet, das einen Triebfahrzeugrechner 18 sowie den Wagen 14 jeweils zugeordnete Wagenrechner 20 umfaßt. Der Triebfahrzeugrechner 18 ist mit den Wagenrechnern 20 über einen Zugbus 22 gekoppelt. Der Zugbus 22 kann beispielsweise ein physikalischer, leitungsgebundener Bus (CAN-Bus) oder ein Funkbus sein. Für die Erfindung ist unwesentlich, wie der Triebfahrzeugrechner 18 mit den Wagenrechnern 20 verbunden ist. Entscheidend ist, daß ein Datenaustausch stattfinden kann. Derartige elektronische Bremssysteme (zum Beispiel <EBAS>) sind allgemein bekannt, so daß im Rahmen der vorliegenden Beschreibung im einzelnen auf Aufbau und Funktion nicht eingegangen werden soll.

Das Triebfahrzeug 12 ist mit den Wagen 14 ferner über eine pneumatische Versorgungsleitung 24 verbunden. Innerhalb der Versorgungsleitung 24 herrscht ein Betriebsdruck, beispielsweise von 5 Bar, der an Bremseinrichtungen 26 der Wagen 14 anliegt. Der Versorgungsdruck wird von einer Versorgungsdruckquelle 28, die dem Triebfahrzeug 12 zugeordnet ist, bereitgestellt.

Der Triebfahrzeugrechner 18 ist über einen Führerbremshebel 30 ansteuerbar, der eine Führerbremselektronik 32 ansteuert.

Die Bremsanlage gemäß Figur 1 zeigt folgende Funktion:

Im Normalbetrieb, wobei unterstellt wird, daß eine Initialisierung des elektronischen Bremssystems 16, eine sogenannte Zugtaufe, erfolgte, wird von dem Triebwerkzeugrechner 18 ein Datenaustausch mit den Wagenrechnern 20 über den Zugbus 22 durchgeführt. Entsprechend einer gewollten Betriebsbremsung wird über den Führerbremshebel 30 und die Führerbremselektronik 32 ein Steuersignal an den Triebfahrzeugrechner 18 gegeben. Dieser teilt daraufhin den Wagenrechnern 20 die entsprechenden Bremssteuersignale mit. Die Wagenrechner 20 sind über Steuerleitungen 34 mit den Bremseinrichtungen 26 verbunden. Entsprechend der gesendeten Bremssteuersignale werden die Bremseinrichtungen 26 angesteuert, so daß eine Bremswirkung in bekannter Weise eintritt.

Zum Betrieb des Triebfahrzeugrechners 18 ist dieser mit einer Spannungsquelle 36 verbunden. In eine Verbindungsleitung 38 der Spannungsquelle 36 mit dem Triebfahrzeugrechner 18 ist wenigstens ein, in dem in Figur 1 gezeigten Beispiel zwei, Schaltmittel 40 eingebunden. Die Schaltmittel 40 sind als Öffner ausgebildet, das heißt, im Ausgangszustand sind diese geschlossen, so daß der Triebfahrzeugrechner 18 mit der Spannungsquelle 36 verbunden ist. Durch die schematische Ansicht in Figur 1 soll verdeutlicht werden, daß ein erstes Schaltmittel 40 in einem in Fahrtrichtung weisenden Führerstand und ein zweites Schaltmittel 40 in einem in entgegengesetzt der Fahrtrichtung weisenden Führerstand des Triebfahrzeuges 12 angeordnet ist. Diese Anordnung ist selbstverständlich lediglich nur beispielhaft, so kann auch jeder andere geeignete Einbauort für das wenigstens eine Schaltmittel 40 im Triebfahrzeug 12 vorgesehen sein.

Das wenigstens eine Schaltmittel 40 stellt einen Notschalter dar, mit dem bei Betätigung der Triebfahrzeugrechner 18 von der Spannungsquelle 36 trennbar ist. Tritt dieser Fall ein, wird die permanente Datenkommunikation zwischen dem Triebfahrzeugrechner 18 und den Wagenrechnern 20 unterbrochen, so daß diese unmittelbar eine Schnellbremsung einleiten. Das heißt, über die Steuerleitungen 34 werden die Bremseinrichtungen 26 aktiviert.

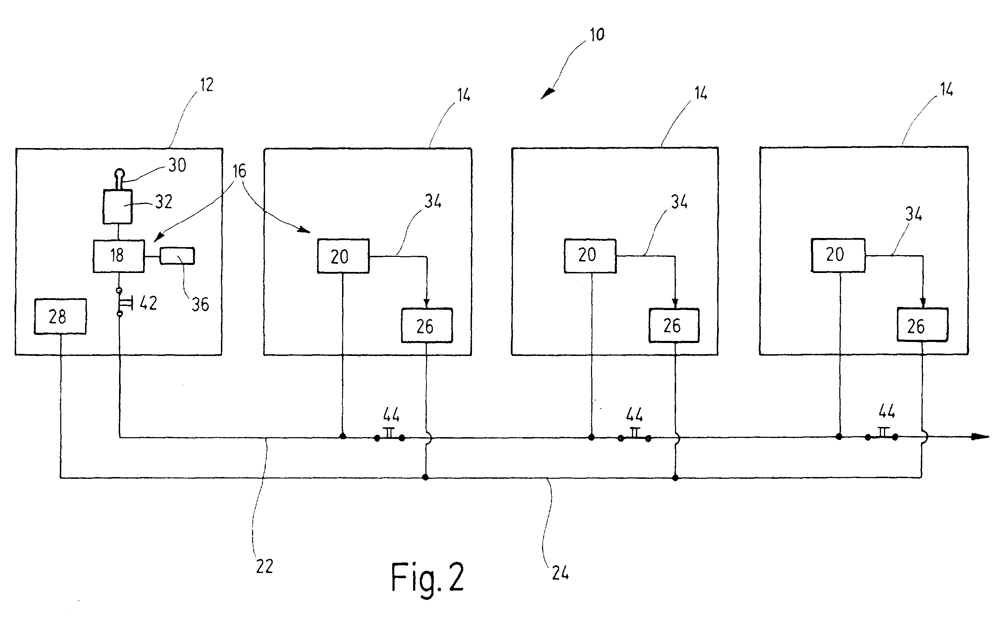

Figur 2 zeigt ein weiteres Ausführungsbeispiel, wobei gleiche Teile wie in Figur 1 mit gleichen Bezugszeichen versehen und nicht nochmals erläutert sind.

Hier ist ein Schaltmittel 42 vorgesehen, das dem Triebfahrzeug 12 zugeordnet ist und unmittelbar in den Zugbus 22 geschaltet ist. Das Schaltmittel 42 ist so ausgelegt, daß bei Betätigung des Schaltmittels 42 eine Datenkommunikation über den Zugbus 22 unterbrochen wird, indem der Datenbus 22 beispielsweise kurzgeschlossen oder geöffnet wird. Hierdurch wird der permanente Datenaustausch zwischen dem Triebfahrzeugrechner 18 und den Wagenrechnern 20 unterbrochen, so daß diese über die Steuerleitungen 34 die Bremseinrichtungen 26 aktivieren. Analog dem in Figur 1 gezeigten Ausführungsbeispiel kann auch hier im Triebfahrzeug 12 die Anordnung von zwei Schaltmitteln 42 vorgesehen sein, so daß in jedem Führerstand des Triebfahrzeuges 12 ein unabhängig und zusätzlich vom Triebfahrzeugrechner 18 betätigbares Schaltmittel angeordnet ist.

Ferner ist in Figur 2 ein weiteres Ausführungsbeispiel angedeutet, nach dem den Wagen 14 jeweils Schaltmittel 44 zugeordnet sind, mittels denen - von den Wagen 14 aus - eine Unterbrechung beziehungsweise ein Kurzschließen des Zugbus 22 möglich ist, so daß ebenfalls eine Schnellbremsung auslösbar ist. Insbesondere, wenn die Wagen 14 zum Personentransport ausgelegt sind, kann hierdurch eine Redundanz der Bremsanlage erhalten werden.

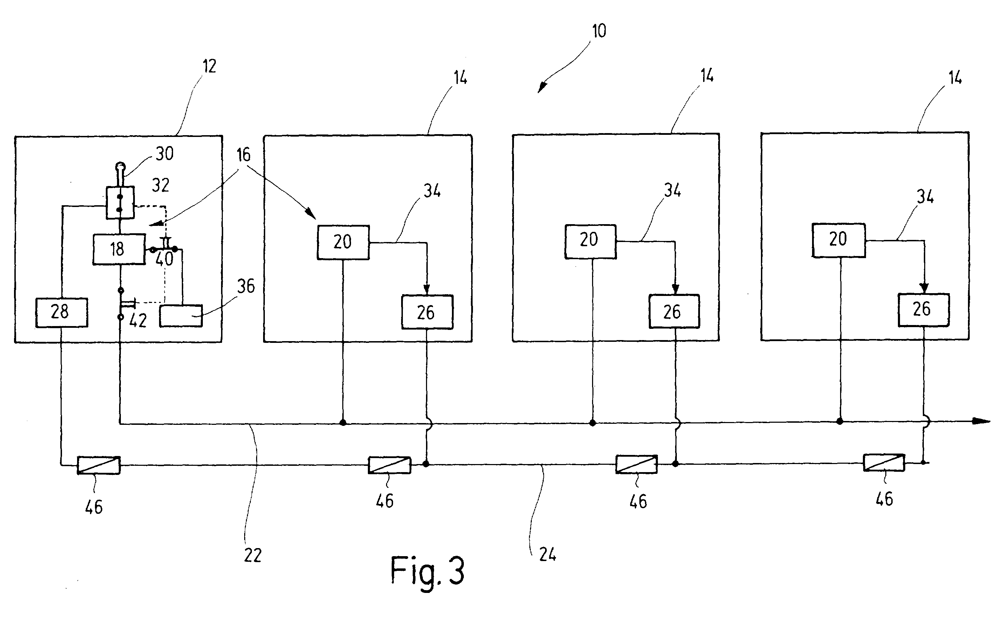

Figur 3 zeigt schließlich ein weiteres Ausführungsbeispiel, wobei wiederum hinsichtlich der bereits erläuterten Teile auf die Beschreibung zu den Figuren 1 und 2 verwiesen wird, so daß insofern nur die bestehenden Unterschiede erläutert werden.

Dem Triebfahrzeugrechner 18 ist hier ein Schaltmittel 40 und ein Schaltmittel 42 zugeordnet, mit dem entweder die Stromversorgung des Triebfahrzeugrechners 18 unterbrochen werden kann oder der Zugbus 22 unterbrochen beziehungsweise kurzgeschlossen werden kann. Es ist möglich, auch nur eines der Schaltmittel 40 oder 42 vorzusehen. Im Unterschied zu den vorhergehenden Figuren wird jedoch nicht sofort eine Schnellbremsung ausgeführt, sondern durch Betätigen der Schaltmittel 40 und/oder 42 wird das Führerbremsventil 32 veranlaßt, die Bremsanlage des Zuges 10 von dem elektrischen Bremssystem 16 auf ein pneumatisches Bremssystem umzustellen. Somit erfolgt ein Umschalten in eine pneumatische Rückfallebene, mittels der nunmehr das Bremsregime des Zuges 10 durchführbar ist. Durch Umschalten in die pneumatische Rückfallebene wird die Versorgungsleitung 24 zur Hauptluftleitung für die Bremsanlage umgeschaltet, so daß in Form von Druckluftschwankungen, insbesondere Druckluftabsenkungen, innerhalb der Versorgungsleitungen 24 Steuerfunktionen für die Bremsanlage übernommen werden können. Hierdurch wird es möglich, innerhalb der Versorgungsleitung 24 installierten Sicherheitseinrichtungen 46, die beispielsweise von sogenannten Ackermann-Hähnen im Triebfahrzeug 12 und in den Wagen 14 gebildet sind, eine Schnellbremsung auszulösen. Über die Sicherheitseinrichtungen 46 kann somit eine Entlüftung der Versorgungsleitung 24 erfolgen, so daß durch Absenken eines Druckes innerhalb der Versorgungsleitung 24 die Bremsanlage auslöst.

Alles in allem wird deutlich, daß durch die zusätzliche Anordnung wenigstens eines der Schaltmittel 40 und/oder 42 und/oder 44 eine Redundanz der Bremsanlage erzielt wird, indem durch diese, unabhängig vom Triebfahrzeugrechner 18 betätigbaren, Schaltmittel 40, 42, 44 entweder eine Schnellbremsung durchführbar ist und/oder ein Umschalten der Bremsanlage in eine pneumatische Rückfallebene erfolgt. Dies führt zu einer erhöhten Sicherheit bei mit elektrischen Bremssystemen 16 ausgestatteten Zügen.

## Patentansprüche

1. Bremsanlage für Züge, insbesondere Güterzüge, mit mindestens einem Triebfahrzeug und wenigstens einem Wagen, wobei die Bremsanlage mit einem elektronischen Bremssystem ausgestattet ist, bei dem ein Triebfahrzeugrechner über einen Zugbus mit wenigstens einem Wagenrechner verbunden ist, und der Triebfahrzeugrechner Bremssteuersignale für die Wagenrechner über den Zugbus bereitstellt, und über die Wagenrechner eine Bremseinrichtung aktivierbar ist, die mit einer zuggebundenen pneumatischen Versorgungsleitung verbunden ist, **dadurch gekennzeichnet**, daß dem Triebfahrzeugrechner (18) wenigstens ein vom Triebfahrzeugrechner (18) unabhängiges, externes Schaltmittel (40, 42, 44) zugeordnet ist, über das eine Unterbrechung einer Datenkommunikation zwischen dem Triebfahrzeugrechner (18) und dem wenigstens einen Wagenrechner (20) auslösbar ist.

2. Bremsanlage nach Anspruch 1, **dadurch gekennzeichnet**, daß mittels dem wenigstens einen Schaltmittel (40) eine Unterbrechung zu einer Spannungsquelle (36) des Triebfahrzeugrechners (18) durchführbar ist.

3. Bremsanlage nach Anspruch 2, **dadurch gekennzeichnet**, daß die Spannungsquelle (36) durch wenigstens zwei, in Reihe geschaltete Schaltmittel (40) abschaltbar ist.

4. Bremsanlage nach einem der vorhergehenden Ansprüche, **dadurch gekennzeichnet**, daß mittels dem wenigstens einen Schaltmittel (42, 44) eine Unterbrechung und/oder Kurzschluß des Zugbus (22) durchführbar ist.

5. Bremsanlage nach Anspruch 4, **dadurch gekennzeichnet**, daß das wenigstens eine Schaltmittel (42) im Triebfahrzeug (12) angeordnet ist.

6. Bremsanlage nach einem der vorhergehenden Ansprüche 4 oder 5, **dadurch gekennzeichnet**, daß das wenigstens eine Schaltmittel (44) in den Wagen (14) angeordnet ist.

7. Bremsanlage nach einem der vorhergehenden Ansprüche, **dadurch gekennzeichnet**, daß durch Betätigung des wenigstens einen Schaltmittels (40, 42, 44) die Bremsanlage in eine pneumatische Rückfallebene umschaltbar ist.
